Europäisches Patentamt

European Patent Office

Office européen des brevets

(19)

(11) Veröffentlichungsnummer: **0 101 607**
**A1**

## (12) EUROPÄISCHE PATENTANMELDUNG

(21) Anmeldenummer: 83108122.9

(22) Anmeldetag: 17.08.83

(51) Int. Cl.³: **H 04 L 25/48,** H 04 L 7/02, H 04 L 3/00

(30) Priorität: 19.08.82 DE 3230836

(43) Veröffentlichungstag der Anmeldung: 29.02.84
Patentblatt 84/9

(84) Benannte Vertragsstaaten: AT BE CH FR GB LI NL

(71) Anmelder: International Standard Electric Corporation, 320 Park Avenue, New York New York 10022 (US)

(72) Erfinder: Schröder, Wolfgang, Allensteiner Strasse 13, D-7530 Pforzheim (DE)

(74) Vertreter: Pohl, Heribert, Dipl.-Ing et al, Standard Elektrik Lorenz AG Patent- und Lizenzwesen Kurze Strasse 8 Postfach 300 929, D-7000 Stuttgart 30 (DE)

(54) **Bi-Phase-Decoder.**

(57) Es wird eine Möglichkeit vorgestellt, wie Takt und Daten aus einem im Bi-Phase-Code übertragenen Datenstrom rückgewonnen werden können, auch wenn der Datenstrom keine Synchronisierbits enthält und seine Übertragungsgeschwindigkeit schwankt.

Zur Taktrückgewinnung wird ein nicht nachtriggerbares Monoflop bei jedem Phasenwechsel angesteuert. Die zwischengeschobenen Phasenwechsel werden dadurch in ihrer Auswirkung unterdrückt. Mit dem Takt wird ein Speicher angesteuert, der zum richtigen Zeitpunkt die gültigen Daten aus dem übertragenen Datenstrom übernimmt und während je einer Taktzeit konstant hält.

W.Schröder-87

Bi-Phase-Decoder

Die Erfindung betrifft eine Auswerteschaltung für einen
im Bi-Phase-Code übertragenen Datenstrom.

In der digitalen Datentechnik spielt die Art der Codierung
eine wichtige Rolle. Schon die Umsetzung von Analog- in
Digitalwerte kann nach verschiedenen Codes erfolgen (z.B.
BCD- oder Gray-Code). Auch die Frage, ob die (meist zwei)
möglichen Zustände durch verschiedene Ströme, Spannungen,
Frequenzen oder ähnliches gekennzeichnet werden, kann je
nach Anforderung unterschiedlich beantwortet werden.
Aufeinanderfolgende Daten ergeben einen Datenstrom, bei
dem zeitlich (bei der Übertragung) oder räumlich (auf
einem Aufzeichnungsmedium) verschiedene Zustände aufeinanderfolgen. Der Dateninhalt kann nun entweder in den
aufeinanderfolgenden Zuständen oder in den Änderungen der
Zustände enthalten sein. Die letzte Möglichkeit wird
meist dann verwendet, wenn entweder mit einfachen, wechselstromgekoppelten Verstärkern gearbeitet werden soll, oder
wenn aus dem übertragenen Datenstrom der Takt wiedergewonnen werden muß. Zur Rückgewinnung der Daten aus einem
übertragenen Datenstrom ist es erforderlich, festzu-

ZT/P2-Bs/Gn

27.05.1982

- 4 -

0101607

W.Schröder-87

stellen, ob zu einem bestimmten Zeitpunkt ein Zustandswechsel in einer Richtung (etwa als Spannungsanstieg) oder in der andern Richtung (etwa als Spannungsabfall) erfolgt. Soll zweimal hintereinander derselbe Wert übertragen werden, so muß demzufolge auch zweimal ein Zustandswechsel in derselben Richtung erfolgen. Dazu muß zwangsläufig zwischenzeitlich ein Zustandswechsel in der Gegenrichtung erfolgen. Dieser zusätzliche Zustandswechsel muß jedoch bei der Auswertung erkannt und unterdrückt werden. Dazu ist ein fester, zeitlicher (oder räumlicher) Abstand der gültigen Zustandswechsel erforderlich. Die gegebenenfalls zusätzlich erforderlichen Zustandswechsel, die für die Dateninhalte ungültig sind, liegen dann möglichst in der Mitte zwischen zwei für die Dateninhalte gültigen Zustandswechsel und können damit erkannt und unterdrückt werden, sofern der Datentakt bekannt ist.

Die eben erwähnte Darstellungsart für einen Datenstrom wird als Bi-Phase-Code bezeichnet; die auftretenden Zustände werden als Phasen, die Zustandswechsel als Phasenwechsel bezeichnet.

Zur Speicherung von Daten im Zusammenhang mit sogenannten Homecomputern werden häufig Bandgeräte eingesetzt, wie sie in der Unterhaltungselektronik üblich sind. Solche Geräte weisen verhältnismäßig hohe Gleichlaufschwankungen auf. Zur Rückgewinnung des Taktes, der für die Rückgewinnung der Daten erforderlich ist, werden üblicherweise in regelmäßigen, verhältnismäßig kurzen Abständen Synchronisationsintervalle eingeschoben, mit denen ein freilaufender Taktgenerator auf der Auswerteseite synchronisiert wird.

W.Schröder-87

Die Erzeugung und Speicherung dieses zusätzlichen Synchronisationssignals erfordert zusätzlichen Aufwand und vor
allem zusätzliches Bandmaterial.

Mit einer bekannten Schaltung, dem Schaltkreis CD 4037 A
von RCA, können die im Bi-Phase-Code übertragenen Daten
rückgewonnen werden, wenn der Takt bekannt ist. Diese
Schaltung hat jedoch den Nachteil, daß diejenigen Phasenwechsel, die für die Datenfolge bedeutungslos sind, nicht
gänzlich unterdrückt werden. Sie führen vielmehr zu kurzen Störimpulsen am Ausgang, sogenannten Spikes.

Der Erfindung liegt die Aufgabe zugrunde, die Auswertung eines im Bi-Phase-Code übertragenen Datenstroms zu verbessern und zu vereinfachen. Insbesondere soll
die für die Datenrückgewinnung erforderliche Taktrückgewinnung ohne zusätzliche Synchronisationssignale möglich
sein.

Die Aufgabe wird erfindungsgemäß dadurch gelöst, daß eine
Taktrückgewinnungsschaltung vorhanden ist, die einen oder
mehrere Detektoren enthält, womit die Zeitpunkte aller
Phasenwechsel festgestellt werden und daß ein Generator
vorhanden ist, der immer dann einen Taktimpuls erzeugt,
der kürzer ist als der kürzeste zulässige Abstand zweier
Daten und länger als die Hälfte des längsten zulässigen
Abstands zweier Daten, wenn durch den oder die Detektoren
ein Phasenwechsel festgestellt wird und der vorausgegangene
Taktimpuls abgelaufen ist.

Für die weitere Auswertung des Datenstroms kann es erforderlich sein, die Zeitpunkte der Phasenwechsel für die
beiden Richtungen (z.B. ansteigende Flanke und abfallende

W.Schröder-87


Flanke) getrennt festzustellen. Hierfür werden dann zwei
getrennte Detektoren eingesetzt.

Der Generator zum Erzeugen der Taktimpulse ist zweckmäßigerweise ein nicht nachtriggerbares Monoflop, in dem jeder
festgestellte Phasenwechsel einen Taktimpuls auslöst, sofern
der vorausgegangene Taktimpuls schon abgelaufen ist. Bei
zwei oder mehr Detektoren ist dabei gleichgültig, welcher
der Detektoren den jeweiligen Phasenwechsel feststellt.

Um die mit Hilfe des rückgewonnenen Taktes ausgeblendeten
Daten von Störimpulsen freizuhalten, die vor allem dann
entstehen, wenn im übertragenen Datenstrom ein zusätzlicher
Phasenwechsel eingeschoben werden muß, dessen Richtung
nichts über den Dateninhalt aussagt, ist es vorteilhaft,
in einer Datenrückgewinnungsschaltung ein speicherndes
Element vorzusehen, in das bei jedem Taktimpuls aus dem
Datenstrom ein neuer Wert übernommen wird.

Bei einer Ausführungsform der Erfindung ist das speichernde Element ein SR-Flip-Flop, das über seinen Setzeingang S
gesetzt wird, wenn zu einem vom Takt als der Aufeinanderfolge von Taktimpulsen bestimmten Zeitpunkt ein Phasenwechsel in einer Richtung (etwa als Spannungsanstieg)
erfolgt und das über seinen Rücksetzeingang R rückgesetzt
wird, wenn zu einem vom Takt bestimmten Zeitpunkt ein
Phasenwechsel in der anderen Richtung (etwa als Spannungsabfall) erfolgt. Zweckmäßigerweise wird dieser vom Takt
bestimmte Zeitpunkt gegenüber dem Anfang eines Taktimpulses
so weit verzögert, daß sich die Laufzeiten innerhalb der
Auswerteschaltung nicht auswirken.

W.Schröder-87

In einer weiteren Ausführungsform ist das speichernde
Element ein D-Flip-Flop, bei dem die Übernahme der angelegten Daten zu einem vom Takt bestimmten Zeitpunkt erfolgt. Diese Ausführungsform ist z.B. dann einsetzbar,
wenn die Zeitpunkte der Phasenwechsel für die beiden
Richtungen nicht getrennt festgestellt werden. Dies ist
z.B. dann der Fall, wenn mehrere Datenströme gleichzeitig
parallel mit demselben Takt übertragen werden, wobei es
dann genügt, den Takt nur aus einem dieser Datenströme
rückzugewinnen und ihn dann für die Rückgewinnung der
Daten auch der anderen Datenströme zu verwenden.

Im folgenden wird die Erfindung anhand eines Ausführungsbeispiels unter Zuhilfenahme der beiliegenden Zeichnung
weiter erläutert.

Fig. 1   zeigt als Ausführungsbeispiel eine erfindungsge-
         mäße Schaltung zur Auswertung eines im Bi-Phase-
         Code übertragenen Datenstroms.

Fig. 2   zeigt das Impulsdiagramm für einige Punkte
         der Schaltung nach Fig. 1.

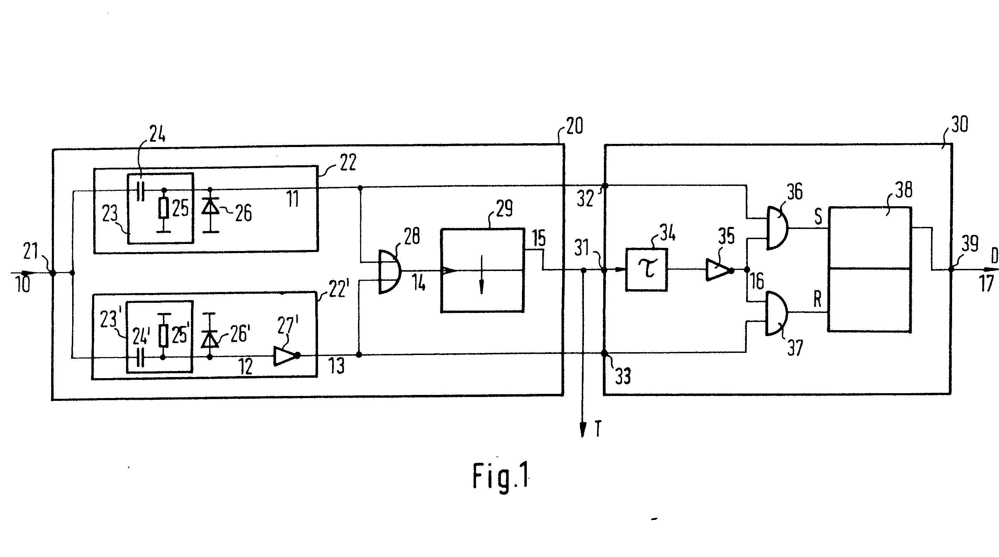

Fig. 1 zeigt den Signalweg 10 ... 17 durch die Teile
21...29 der Taktrückgewinnungsschaltung 20 sowie durch
die Teile 31 ... 39 der Datenrückgewinnungsschaltung 30.

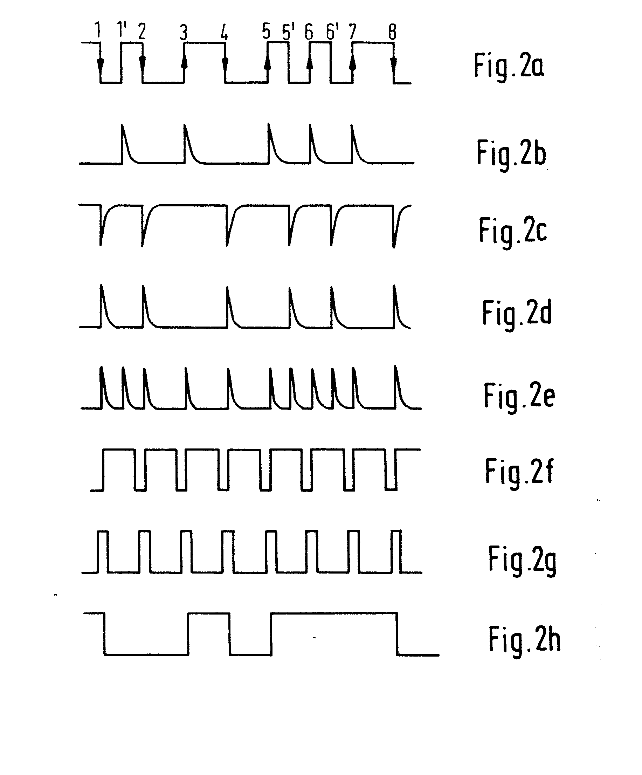

Am Eingang 21 der Taktrückgewinnungsschaltung 20 teilt sich der
übertragene Datenstrom 10 (Fig. 2a) und durchläuft zwei
einander entsprechende parallele Detektoren 22 und 22'. In
beiden Detektoren wird das Signal zunächst im Differenzierer

W.Schröder-87

23 bzw.23', bestehend jeweils aus einem Längskondensator 24 bzw. 24' und einem Parallelwiderstand 25 bzw. 25', differenziert. Mit nachfolgenden Dioden 26 und 26' werden im einen Detektor 22 die positiven, im andern Detektor 22' die negativen Spitzen ausgefiltert. Dies kann entweder so geschehen, daß, wie in Fig. 1 gezeichnet, die Dioden 26 und 26' parallel zu den Ausgängen der Differenzierer 23 und 23' liegen und damit die jeweils unerwünschte Spitze kurzschließen. Es kann aber auch so geschehen, daß die Dioden in Reihe geschaltet sind und so die jeweils unerwünschte Spitze sperren. Im Detektor 22' wird das Signal noch durch einen Inverter 27' invertiert. Die Ausgänge der Detektoren 22 und 22' sind mit den Eingängen eines ODER-Gatters 28 verbunden. Der Ausgang des ODER-Gatters ist mit dem Eingang eines nicht nachtriggerbaren Monoflops 29 verbunden. Die Standzeit des Monoflops ist kürzer als der kürzeste zulässige Abstand zweier Daten und länger als die Hälfte des längsten zulässigen Abstandes zweier Daten.

Der Ausgang des Monoflops 29 ist mit dem Takteingang 31 der Datenrückgewinnungsschaltung 30 verbunden. Der Takt T kann an dieser Stelle auch für andere Zwecke abgenommen werden. Vom Takteingang 31 kommend durchläuft der Takt zunächst ein Verzögerungsglied 34 und anschließend einen Inverter 35. Zwei Dateneingänge 32 und 33 sind mit den Ausgängen der Zweige 22 bzw.22' verbunden. Je ein Eingang zweier UND-Gatter 36 und 37 ist mit je einem der beiden Dateneingänge 32 und 33 verbunden. Der jeweils andere Eingang der UND-Gatter 36 und 37 ist mit dem Ausgang des Inverters 35 verbunden. Der Ausgang des UND-Gatters 36 ist mit dem Setzeingang S eines SR-Flip-Flops 38 verbunden, der Ausgang des UND-Gatters 37 mit dessen Rücksetzeingang R. Der Aus-

- 8 -

W.Schröder-87

gang des SR-Flip-Flops 38 ist mit dem Datenausgang 39 der Datenrückgewinnungsschaltung 30 verbunden.

Fig. 2a zeigt den übertragenen Datenstrom 10, der am Eingang 21 der Taktrückgewinnungsschaltung 20 anliegt. Die Richtungen der Phasenwechsel an den mit 1 ... 8 gekennzeichneten Zeitpunkten beinhalten die Datenfolge. Zu den mit 1', 5', und 6' bezeichneten Zeitpunkten sind zusätzliche Phasenwechsel eingeschoben. Fig. 2b zeigt positive Spitzen 11, wie sie im Detektor 22' entstehen. Sie bezeichnen die Zeitpunkte ansteigender Flanken im übertragenen Datenstrom 10. Fig. 2c zeigt entsprechend negative Spitzen 12 und Fig. 2d deren Invertierung 13. Damit werden die im Detektor 22' festgestellten Zeitpunkte der abfallenden Flanken des übertragenen Datenstroms 10 gekennzeichnet. Fig. 2e zeigt das Summensignal 14 das die positiven Spitzen 11 und die Invertierung 13 der negativen Spitzen 12 zusammenfaßt. Dieses Summensignal 14 zeigt die Zeitpunkte aller Phasenwechsel des übertragenen Datenstroms 10, das sind sowohl die ansteigenden, wie auch die abfallenden Flanken. Fig. 2f zeigt den Takt 15 am Ausgang des Monoflops 29. Zu den mit 1 ... 8 bezeichneten Zeitpunkten beginnt jeweils ein Taktimpuls, der so lang ist, daß sich bei der durchschnittlichen Übertragungsgeschwindigkeit ein Impuls-Pause-Verhältnis von 3:1 ergibt. Zu den mit 1', 5' und 6' bezeichneten Zeitpunkten wird das Monoflop 29 durch das Summensignal 14 ebenfalls angesteuert. Da zu diesen Zeitpunkten der vorangegangene Taktimpuls jedoch noch nicht abgeklungen ist, kann sich, ein nicht nachtriggerbares Monoflop vorausgesetzt, die Ansteuerung zu diesen Zeitpunkten nicht auswirken. Damit ist gewährleistet, daß bei jedem Phasenwechsel des übertragenen Datenstroms 10,

W.Schröder-87

der für den Dateninhalt von Bedeutung ist, ein Taktimpuls entsteht, während die notwendigerweise zwischengeschobenen Phasenwechsel ohne Informationsgehalt unberücksichtigt bleiben. Wie ein Vergleich der Figuren 2e und 2f ergibt, ist durch die Wahl des Impuls-Pause-Verhältnisses beim Takt gewährleistet, daß die Übertragungsgeschwindigkeit verhältnismäßig stark schwanken kann und dennoch der Takt 15 korrekt rückgewonnen werden kann. Der Phasenwechsel zum Zeitpunkt 1' kann sich noch um einige Zeit verzögern, ohne sich auszuwirken. Der Phasenwechsel zum Zeitpunkt 2 kann schon um einige Zeit früher erscheinen und wirkt sich dennoch aus. Entsprechendes gilt für die übrigen Phasenwechsel. Nur beim Einschalten oder bei Störungen ist der Takt kurzfristig falsch.

Wird der Takt 15 geeignet verzögert und invertiert, so ergibt sich das Ausblendsignal 16 (Fig. 2g). Wird mit diesem Ausblendsignal 16 direkt oder ein speicherndes Element 38 getaktet, so ist sichergestellt, daß an dessen Ausgang nur zu den vom Ausblendsignal 16 bestimmten Zeitpunkten Änderungen erfolgen können. Es können deshalb keine Störimpulse entstehen. Fig. 2h zeigt den decodierten Datenstrom 17, wie er am Datenausgang 39 ansteht.

Das in Fig. 1 gezeigte Schaltungsbeispiel kann noch in verschiedener Weise abgeändert werden. Die nicht invertierenden Gatter 28, 36 und 37 können durch invertierende ersetzt werden, wenn auch die übrigen Polaritäten entsprechend berücksichtigt werden. Der Inverter 35 kann entfallen, wenn am Monoflop 29 ein invertierender Ausgang benützt wird. Das Verzögerungsglied 34 könnte entfallen,

W.Schröder-87

wenn die Differenzierer 23 und 23' durch solche Schaltungen ersetzt würden, die statt Nadelimpulsen Rechteckimpulse mit entsprechender Länge liefern. Das Monoflop 29 kann durch einen Phasenregelkreis ersetzt oder ergänzt werden. Damit könnte die Übertragungssicherheit bei gestörtem Signal (z.B. durch Rauschen, Drop-Out) erhöht werden. Anstelle des dargestellten SR-Flip-Flops 38 könnte ein D-Flip-Flop verwendet werden, das vom Ausblendsignal 16 getaktet wird und an dessen Dateneingang direkt der übertragene Datenstrom 10 angeschlossen ist.

W.Schröder-87

Patentansprüche

1. Auswerteschaltung für einen im Bi-Phase-Code übertragenen Datenstrom, d a d u r c h   g e k e n n z e i c h n e t ,   daß eine Taktrückgewinnungsschaltung (20) vorhanden ist, die einen oder mehrere Detektoren (22, 22') enthält, womit die Zeitpunkte aller Phasenwechsel festgestellt werden und daß ein Generator (29) vorhanden ist, der immer dann einen Taktimpuls erzeugt, der kürzer ist als der kürzeste zulässige Abstand zweier Daten und länger als die Hälfte des längsten zulässigen Abstands zweier Daten, wenn durch den oder die Detektoren (22, 22') ein Phasenwechsel festgestellt wird und der vorausgegangene Taktimpuls abgelaufen ist.

2. Auswerteschaltung nach Anspruch 1, dadurch gekennzeichnet, daß zwei getrennte Detektoren (22, 22') vorhanden sind, die die Zeitpunkte der Phasenwechsel für die beiden Richtungen getrennt feststellen.

3. Auswerteschaltung nach einem der Ansprüche 1 oder 2, dadurch gekennzeichnet, daß der Generator (29) ein nicht nachtriggerbares Monoflop ist, in dem jeder von einem

0101607

W.Schröder-87

Detektor (22, 22') festgestellte Phasenwechsel einen
Taktimpuls auslöst, sofern der vorausgegangene Taktimpuls schon abgelaufen ist.

4.   Auswerteschaltung nach einem der Ansprüche 1 bis 3,
dadurch gekennzeichnet, daß in einer Datenrückgewinnungsschaltung (30) ein speicherndes Element (38) vorhanden
ist, in das bei jedem Taktimpuls aus dem Datenstrom ein
neuer Wert übernommen wird.

5.   Auswerteschaltung nach Anspruch 4, dadurch gekennzeichnet, daß das speichernde Element (38) ein SR-Flip-
Flop ist, das über seinen Setzeingang S gesetzt wird,
wenn zu einem vom Takt als der Aufeinanderfolge von Taktimpulsen bestimmten Zeitpunkt ein Phasenwechsel in einer
Richtung (etwa als Spannungsanstieg) erfolgt und das
über seinen Rücksetzeingang R rückgesetzt wird, wenn zu
einem vom Takt bestimmten Zeitpunkt ein Phasenwechsel in
der anderen Richtung (etwa als Spannungsabfall) erfolgt.

6.   Auswerteschaltung nach Anspruch 4, dadurch gekennzeichnet, daß das speichernde Element (38) ein D-Flip-
Flop ist, bei dem die Übernahme der angelegten Daten zu
einem vom Takt bestimmten Zeitpunkt erfolgt.

Fig.1

1/2

0101607

Fig.2a

Fig.2b

Fig.2c

Fig.2d

Fig.2e

Fig.2f

Fig.2g

Fig.2h

0101607

Nummer der Anmeldung

**Europäisches Patentamt**

# EUROPÄISCHER RECHERCHENBERICHT

## EINSCHLÄGIGE DOKUMENTE

EP 83108122.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE - B2 - 2 522 909 (ROBERT BOSCH)<br><br>* Anspruch 1: Spalte 2, Zeilen 5-49; Spalte 3, Zeile 11 - Spalte 4, Zeile 18; Fig. 1,2 *<br><br>-- | 1,3,4 | H 04 L 25/48<br>H 04 L 7/02<br>H 04 L 3/00 |
| A | DE - A1 - 2 856 017 (BROWN, BOVERI)<br><br>* Seite 2, Zeile 4 - Seite 5, Zeile 35: Fig. *<br><br>-- | 1 | |
| A,P | EP - A1 - 0 059 493 (BBC)<br><br>* Seite 1, Zeile 1 - Seite 3, Zeile 22: Seite 6, Zeile 16 - Seite 9, Zeile 16; Fig. 1-3 *<br><br>-- | 1,3 | |
| A | US - A - 3 737 895 (CUPP et al.)<br><br>* Spalte 1, Zeile 10 - Spalte 2, Zeile 15; Spalte 2, Zeile 38 - Spalte 3, Zeile 8; Fig. 1 *<br><br>---- | 1,2 | **RECHERCHIERTE SACHGEBIETE (Int. Cl. 3)**<br><br>H 04 L 25/00<br>H 04 L 7/00<br>H 04 L 3/00<br>H 03 K 13/00<br>G 11 B 5/00<br>G 06 F 3/00 |

Der vorliegende Recherchenbericht wurde für alle Patentansprüche erstellt.

| Recherchenort | Abschlußdatum der Recherche | Prüfer |
|---|---|---|
| WIEN | 22-11-1983 | HAJOS |